# EUROPEAN PATENT APPLICATION

(11) **EP 1 484 384 A1**
(43) Date of publication of application: **08.12.2004**
(21) Application number: 03743989.0
(22) Date of filing: 28.02.2003
(51) Int. Cl.: C10L 1/00, C10L 1/02, C11B 13/04, C11C 3/10

(54) **METHOD FOR PRODUCING BIO-FUEL**

(30) Priority: 11.03.2002 JP 2002065309; 24.09.2002 JP 2002278086
(71) Applicant: Mizusawa Industrial Chemicals Ltd., Tokyo 103-0022 (JP)
(72) Inventor: ABE, Kiyoshi, Mizusawa Industrial Chemicals, Ltd., Tokyo 103-0022 (JP); NITTA, Hiroshi, Mizusawa Industrial Chemicals, Ltd, Tokyookyo 103-0022 (JP); ENOCH, Y., Park, Shizuoka-shi, Shizuoka 422-8017 (JP); ANA VANESSA, Lara Pizarro, Shizuoka-shi, Shizuoka 422-8017 (JP)
(74) Representative: Cresswell, Thomas Anthony
(86) International application number: PCT/JP2003/002384
(87) International publication number: WO 2003/076553

(57) **Abstract**

A method of producing bio-fuels by causing an enzyme to act on the oils and fats in a waste clay to decompose them into a fatty acid which is then reacted with a lower alcohol to form an ester that can be used as a bio-fuel. An environment friendly bio-fuel is obtained from the starting waste clay through a decreased number of steps without requiring cumbersome operations.

## Description

### (Technical Field)

The present invention relates to a method of producing bio-fuels. More specifically, the invention relates to a method of producing bio-fuels by utilizing oils and fats in the waste clay.

### (Background Art)

Environment friendly fuels utilizing oils and fats have been proposed in the names of bio-fuels and bio-diesels.

A representative example of the bio-diesels may be obtained by causing a caustic soda and a methyl alcohol to act upon the used fry oil to esterify it with methyl.

Japanese Unexamined Patent Publication (Kokai) No. 138796/1983 teaches obtaining a fuel oil that can be used for diesel engines at a low cost and in a high yield by adding an alkali aqueous solution to the starting plant oil, heating the mixture, washing the mixture with water after it has been stirred, followed by the removing-acid treatment.

According to the method of saponifying the oils and fats with an alkali followed by the neutralization with an acid to liberate the fatty acid as represented by the above prior art, however, an increased number of steps are required and, besides, the alkali and the acid that are used remain in the reaction system arousing a problem in that cumbersome operation is needed for removing them.

In the field of refining oils and fats, on the other hand, waste clay occluding large amounts of oils and fats are produced as by-products without, however, any effective treatment therefor but simply blending and firing them together for producing the portland cement. It has further been attempted to extract and remove oil components contained in the waste clay with an organic solvent such as hexane. However, it is difficult to remove the oil components present in the pores of white clay (fuller's earth), and no effective processing means has yet been found.

### (Disclosure of the Invention)

It is an object of the present invention to provide a method of producing environment friendly bio-fueld by using waste clay as a starting material through a decreased number of steps without requiring any cumbersome operation.

According to the present invention, there is provided a method of producing bio-fuels by causing an enzyme to act upon the oils and fats in a waste clay to decompose them into a fatty acid, and reacting the formed fatty acid with a lower alcohol to form an ester thereof that can be used as a bio-fuel.

In the production method of the present invention, it is desired that:
1. The oils and fats are those of plant oils;
2. The decomposition and the reaction of the fatty acid with the lower alcohol are carried out in water or in an organic solvent;
3. The enzyme is a lipase;
4. The reaction of the fatty acid with the lower alcohol is carried out in the presence of from 25 to 250 parts by weight of water or the organic solvent per 100 parts by weight of the oils and fats;
5. The organic solvent is a hexane or a petroleum ether;
6. The reaction of the fatty acid with the lower alcohol is carried out at a temperature of from 20 to 50°C;
7. A glyceride contained in the residual waste clay after the fatty acid is separated, is extracted and is circulated into a step of decomposition into the fatty acid or into the step of esterification; and
8. The lower alcohol with not more than 8 carbon atoms is used.

As pointed out already, the acid clay (acidic white clay) or the activated clay obtained by chemically treating the acid clay is widely used for the decoloration and refining of oils and fats. In conducting the processing, however, there is produced waste clay accompanied by a problem of disposal thereof. Namely, the waste clay contains about 20 to about 60% by weight of oils and fats that are difficult to separate. Besides, the waste clay is in the form of a sticky paste and can be handled with very difficulty. Besides, the waste clay is produced in amounts of as large as 50,000 tons a year. According to the present invention, however, the waste clay is utilized for the production of bio-fuels to effectively utilize the plant oils in the waste clay as resources and, further, to reuse the waste clay from which the plant oils have been removed. Thus, the invention effectively utilizes the resources again while effectively preventing contamination in the natural environment.

According to the present invention, an enzyme acts upon the oils and fats in the waste clay to decompose them into a fatty acid, and the thus formed fatty acid is then reacted with a lower alcohol to form an ester thereof. Namely, the enzyme acts upon the oils and fats in the waste clay, whereby the oils and fats are effectively decomposed into the fatty acid. Besides, the enzyme reaction proceeds even at relatively low temperatures and the reaction can be easily controlled. Further, the fatty acid formed by the decomposition is reacted with the lower alcohol so as to be esterified, and can be easily separated and recovered without requiring any cumbersome operation.

### (Brief Description of the Drawings)

Fig. 1 is a graph plotting relationships between the reaction times and the amounts of the formed ester in Example 1 (black circles in the drawing) and in Comparative Example 1 (open circles in the drawing);
Fig. 2 is a graph plotting relationships between the reaction times and the amounts of the formed ester in Example 2 (black circles in the drawing) and in Comparative Example 2 (open circles in the drawing);
Fig. 3 is a graph plotting relationships between the reaction times and the amounts of the formed ester in Example 3 (black circles in the drawing) and in Comparative Example 3 (open circles in the drawing);
Fig. 4 is a graph plotting relationships between the reaction times and the amounts of the formed ester in Example 4 (open circles: reacted for 72 hours, black circles: reacted for 48 hours);
Fig. 5 is a graph plotting relationships between the reaction times and the amounts of the formed ester in Example 5 (open circles), in Example 6 (black circles), in Example 7 (black triangles), in Example 8 (black squares), in Example 9 (open squares), in Example 10 (open triangles) and in Example 11 (open rhombuses);
Fig. 6 is a graph plotting relationships between the reaction times and the amounts of the formed ester in Examples 16 to 18, the used solvents being a hexane (black triangles), a diethyl ether (black circles) and a petroleum ether (open squares);
Fig. 7 is a graph plotting a relationship between the reaction time and the amount of the formed ester in Example 19; and
Fig. 8 is a graph plotting a relationship between the reaction time and the amount of the formed ester in Example 20.

### (Best Mode for Carrying Out the Invention)

### [Waste clays]

The waste clay used in the method of the present invention is separated as a by-product in the step of decoloring or refining oils and fats by using the white clay (fuller's earth) for decoloring or refining. The waste clay used in the present invention contains oil components and is not allowed to be discarded from the standpoint preventing contamination of the environment. It has therefore been eagerly desired to effectively utilize the waste clay.

That is, to the oils and fats that are to be decolored or refined, there is added a clay mineral of the Group of montmorillonite such as acid clay or activated clay that is obtained by treating the above clay mineral with an acid and/or an alkali in the form of a powdery agent for decoloring or refining, and the two are homogeneously stirred together such that the color components and impurity components contained in the oils and fats are adsorbed by the waste clay particles. The waste clay separated after the decoloring or refining contains oils and fats in amounts equivalent to oil-absorbing amounts of the white clay that is used.

The oils and fats are decolored under known conditions by, for example, adding 0.1 to 5% of white clay as a decoloring or refining agent based on the weight of the oils and fats, and stirring the two compositions at a temperature of from 90 to 150°C for 5 to 30 minutes to thereby complete the processing for decoloring or refining.

The mixture after decolored or refined is supplied to any filter such as a filter press, a belt filter, the Oliver filter, the American filter or to a pressure-reducing or a pressurizing filter such as a centrifugal filter, to obtain refined oils and fats and the so-called waste clay which is the used decoloring or refining agent. The waste clay usually contains from about 20 to about 60% by weight of oil components held by the particles though it may vary depending upon the kind of the starting oil that is to be refined.

The waste clay used in the present invention uses, as the decoloring or refining white clay, the smectite clay minerals such as acid clay (montmorillonite), bentonite, saponite, hectorite and stevensite as well as the chained clay mineral such as attapulgite, or acid-treated products thereof.

Among these clay minerals, the clay minerals of montmorillonite and the acid-treated products thereof are widely used for decoloring and refining oils and fats.

The clay mineral of montmorillonite such as the acid clay is an aluminosilicate having, as a basic unit, a three-layer structure in which an AlO₆ octahedral layer is sandwiched between the two SiO₄ tetrahedral layers, the three-layer structures of this basic unit being further laminated in many number in the C-axis direction to constitute a laminar crystalline structure. This laminar crystalline structure is common in the clay minerals of montmorillonite.

Among the montmorillonites, the acid clay widely produced in Japan are weathered and Al atoms in the AlO₆ octahedral layer in the three-layer structure which is the basic unit of the montmorillonite are partly substituted by an alkaline earth metal such as magnesium or calcium, and hydrogen ions are bonded thereto to compensate for an atomic value. Therefore, if the acid clay is suspended in an aqueous solution of table salt to measure its pH value, the acidic property is exhibited since the hydrogen ions are replaced by the sodium (Na) ions. On the other hand, the bentonite exhibits a pH which is neutral to very weakly alkaline since the exchangeable cations are mostly those of sodium (Na) and further exhibits a large water-swelling property. On the other hand, the acid clay'is very advantageous from the standpoint of adsorption since the sodium ions have been substituted by an alkaline earth metal, the amount of the alkali metal component is small, the water-swelling property is small, and the silicic acid is contained in large amounts. As the montmorillonite, therefore, any acid clay produced in Japan is widely used. There is further used a clay mineral of montmorillonite called sub-bentonite (Ca-type bentonite).

The following Table 1 shows a general chemical composition of acid clay (dried at 100°C).

**Table 1**

| | |
|---|---|
| SiO₂ | 61.0 to 74.0 (% by weight) |
| Al₂O₃ | 12.0 to 23.0 |
| Fe₂O₃ | 2.0 to 3.5 |
| MgO | 3.0 to 7.0 |
| CaO | 1.0 to 4.0 |
| K₂O | 0.3 to 2.0 |
| Na₂O | 0.3 to 2.0 |
| Ig.loss | 5.0 to 10.0 |

In using the acid clay, the rocks such as cristobalite, quartz and feldspar contained therein can be easily separated by a separation method utilizing the difference in the specific gravity (such classification means as hydraulic elutriation, air elutriation, etc.). Among them, the cristobalite of crystalline silicic acid easily reacts with an alkali and can be converted into an alkali silicate, and can, hence, be removed even by this method. The purity of the laminar crystalline structure can be improved by the above methods.

On the other hand, the acid-treated product of acid clay has been known as activated clay which can be used as an agent for refining oils and fats. The acid-treated product can be easily prepared by treating the acid clay with a mineral acid solution such as of sulfuric acid or hydrochloric acid, partly eluting the basic component contained therein and washing it. Due to this treatment with acid, the laminar crystalline structure possessed by the acid clay is partly destroyed, but the content of silicic acid (SiO₂) increases contributing to increasing the specific surface area and improving properties such as adsorption properties. The acid-treated product of acid clay and activated clay that is generally placed in the market and intermediate products thereof, serve as refining agents exhibiting excellent properties.

The acid-treated product usually possesses the composition shown in Table 2 below though it may vary depending upon the kind of the starting acid clay or the conditions for the treatment with acid.

**Table 2**

| | |
|---|---|
| SiO₂ | 65.0 to 83.0 (% by weight) |
| Al₂O₃ | 5.0 to 12.0 |
| Fe₂O₃ | 1.0 to 3.5 |
| MgO | 1.0 to 7.0 |
| CaO | 0.5 to 4.0 |
| K₂O | 0.2 to 2.0 |
| Na₂O | 0.2 to 2.0 |
| Ig.loss | 5.0 to 10.0 |

The chained clay mineral such as attapulgite has a three-dimensional chained structure like alternately stacking talc bricks. The holes formed in the chained gaps have a large surface area. Therefore, these chained clay minerals, too, exhibit adsorbing action and absorbing action to occlude oils and fats, and can, hence, be used in the invention.

The above-mentioned clay minerals and the acid-treated products thereof are used in the invention in the form of so-called waste clay occluding plant oils.

The plant oils contained in the waste clay of the invention are those which widely exist in the natural plant world and chiefly comprise esters of fatty acid and glycerin. Examples include safflower oil, soybean oil, rape oil, palm oil, palm kernel oil, cotton seed oil, coconut oil, rice bran oil, sesame oil, castor oil, linseed oil, olive oil, tung oil, tsubaki oil, peanut oil, kapok oil, cacao oil, Japan wax, sunflower oil and corn oil. It is desired that the plant oil used in the present invention at least partly comprises chiefly an ester of an unsaturated fatty acid and glycerin.

### [Enzymes]

In the present invention, any enzyme can be used provided it is capable of hydrolyzing oils and fats, and forms a fatty acid. Usually, a lipase can be used. There is no limitation on the origin, and there can be used a lipase stemming from microorganisms, a lipase stemming from a plant and a lipase stemming from an animal pancreas. The lipase that is used may be secured to a suitable carrier.

Concrete examples of the lipase include:
Lipase OF stemming from Candida cylindracea (Meito Sangyo Co.);
Lipase Type VII stemming from Candida rugosa (Sigma Co.);
Lipase Type 11 stemming from Rhizopus arrhizus (Sigma Co.);
Lipase F-AP15 stemming from Rhizopus oryzae (Amano Enzyme Co.);
Lipase A-10FG stemming from Rhizopus japonicus NR400 (Nagase Co.);
Sumizyme NLS stemming from Aspergillus niger (Shin-nihon Kagaku Co.);
Lipase PN stemming from Phycomyces nitens NRRL 2444 (Wako Co.);
Lipase Type II stemming from Porcine pancreas (Sigma Co.);
Lipase stemming from Pseudomonas cepacia (Sigma Co.);
Lipase stemming from Mucor javanicus (Sigma Co.); and
Alkali lipase (NOVO Co.);
which, however, are only for explanations and to which only the lipases are in no way limited.

### [Enzyme reactions and esterification]

According to the present invention, an enzyme acts upon the oils and fats in the waste clay to decompose them into a fatty acid which is, then, reacted with a lower alcohol so as to be esterified.

The enzyme reaction of oils and fats can be conducted under the known conditions. The reaction can be conducted in the presence of water or an organic solvent. In particular, it is desired to conduct the reaction by using an organic solvent such as hexane, petroleum ether, acetone or heptane and, particularly, hexane or petroleum ether. It is desired that water is supplied in the form of an aqueous solution or an aqueous dispersion of an enzyme. It is, of course, allowable to add the water separately from the enzyme.

The enzyme is used in an amount that has heretofore been used for the decomposition with enzyme depending upon the amounts of oils and fats contained in the waste clay, and specifically in an amount of from 30 to 85 IU and, particularly, from 50 to 65 IU per gram of oils and fats in the waste clay.

The amount of water or organic solvent present in the reaction system is from 25 to 250 parts by weight per 100 parts by weight of oils and fats in the waste clay. In particular, water is preferably used in an amount of from 25 to 75 parts by weight. The organic solvent is preferably used in an amount of from 80 to 210 parts by weight.

In decomposing the oils and fats into a fatty acid, when the amount of water or the organic solvent is greater than, or smaller than, the above range, the yield of fatty acid tends to decrease. When the enzyme acts upon the waste clay to carry out the enzyme reaction in the copresence of the used clay and the oils and fats, it is desired to use the water in a relatively large amounts within the above range. The organic solvent, on the other hand, may be present in an amount which is large enough for fluidizing the waste clay. An excess use of the organic solvent results in a decrease in the yield. It is, therefore, most desired that the organic solvent is used in such an amount that the ratio of the amount of organic solvent/waste clay (weight ratio) is in a range of from 0.45 to 0.82 and, particularly, from 0.55 to 0.70.

The decomposition reaction into the fatty acid may be conducted in a temperature range in which the enzyme maintains activity and, usually, in a range of from 20 to 50°C and, particularly, from 30 to 40°C. In conducting the enzyme reaction, a preferred pH value may differ depending upon the kind of the enzyme and the kind of the waste clay. In general, however, it is desired that the pH lies in a range of from 5.0 to 8.0. For this purpose, it is desired to use a buffer solution.

There is no particular limitation on the time of the enzyme reaction. The time may be such that a desired decomposition ratio is accomplished, for example, from about 40 to about 72 hours.

As the lower alcohol used for the esterification of the fatty acid, there can be exemplified those alcohols having not more than 8 carbon atoms, such as methanol, ethanol, propyl alcohol, isopropyl alcohol, butyl alcohol, isobutyl alcohol, sec-butyl alcohol, tert-butyl alcohol, n-amyl alcohol, isoamyl alcohol, hexyl alcohol, heptyl alcohol and octyl alcohol. In particular, it is desired to use those alcohols having not more than 7 carbon atoms. Among them, it is desired to use methanol from the standpoint of reactivity and cost.

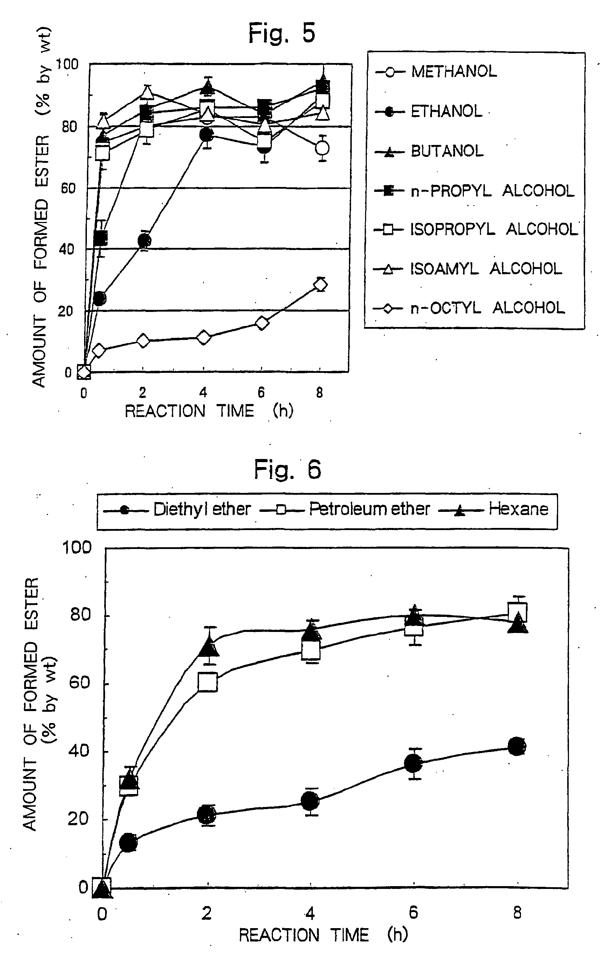

It is desired that the lower alcohol is used in an amount of not smaller than an equivalent with respect to the fatty acid and particularly in such an amount that fatty acid:alcohol (mole ratio) is from 1:3 to 1:6 and, preferably, from 1:3 to 1:4 (see Fig. 6).

It is desired that the fatty acid is esterified in the presence of water or an organic solvent from the standpoint of increasing the yield of ester like when the oils and fats are decomposed into the fatty acid with the enzyme.

In conducting the esterification, the water or the organic solvent is used in an amount of from 25 to 250 parts by weight per 100 parts by weight of the oils and fats like in the step of decomposing the oils and fats into fatty acid. In particular, it is desired that the water is used in an amount of from 25 to 75 parts by weight. Further, it is desired that the organic solvent is used in an amount of from 80 to 210 parts by weight.

In esterifying the fatty acid, when the amount of the water or the organic solvent is greater than, or smaller than, the above range, the yield of the ester tends to decrease.

The esterification reaction of the fatty acid may be conducted in a temperature range suited for the esterification reaction, e.g., in a range of from 20 to 50°C and, particularly, from 30 to 40°C. There is no particular limitation on the time of the esterification reaction. The time of the esterification reaction may be such that a desired yield of ester is accomplished, e.g., from about 48 to about 72 hours.

According to the present invention, the enzyme reaction and the esterification reaction can be carried out as a one-pot reaction continuously in the same reaction system or as a two-stage reaction.

That is, the one-pot reaction is conducted by feeding the waste clay, an aqueous solution or a dispersion of an enzyme and a lower alcohol to the reaction system, or by feeding the waste clay, an organic solvent, an enzyme and a lower alcohol to the reaction system, and recovering the formed ester from the reaction system.

The two-stage reaction is conducted by feeding the waste clay, an enzyme and an organic solvent to the reaction system or by feeding the waste clay and an aqueous solution or a dispersion of an enzyme to the reaction system to conduct the enzyme reaction and, then, by feeding a lower alcohol to the reaction system to carry out the esterification reaction and, recovering the formed ester from the reaction system.

The enzyme reaction in the water system may be carried out by kneading the waste clay and the aqueous solution or dispersion of the enzyme in a paste-like or mud-like state. Or, the enzyme reaction in the water system may be carried out in the state of a dispersion thereof by using a diluting solvent.

The resulting ester of fatty acid can be separated and recovered by a known means such as distillation, extraction, oil/water separation or the like method.

The unreacted glyceride may remain in the residue of waste clay from which the fatty acid has been separated, or the enzyme may remain in the residue of the waste clay. The glyceride contained in the residue may be extracted and circulated into the step of decomposition into fatty acid or into the step of esterification. As required, further, the enzyme contained in the residue of the waste clay may be used again.

It is further allowable to add fats and oils or a waste edible oil to the waste clay containing fats and oils, cause an enzyme to act thereon to decompose it into the fatty acid, and react the formed fatty acid with a lower alcohol followed by the esterification. Or, it is further allowable to implant microbes onto the oils and fats in the waste clay to form an enzyme that decomposes the oils and fats into a fatty acid, thereby to react the formed fatty acid with a lower alcohol followed by the esterification.

### (EXAMPLES)

The invention will now be described by way of the following Examples.

### (Measuring methods)

### (1) Measuring the amounts of oil in the waste clay.

By using a 5-liter flask, the waste clay and the n-hexane were mixed together at a weight ratio of 1:1, and were extracted at 30°C for 10 minutes. The obtained hexane phase was separated, and the oil was extracted by using a vacuum rotary evaporator. This operation was conducted twice to recover the obtained oil component which was then dried in a drier heated at 60°C until the weight became constant. The weight was measured and was regarded to be the amount of oil.

### (2) Saponification value.

1.5 Grams of the oil extracted from the waste clay was taken into a 250-ml flask, and to which was added and mixed 25 ml of potassium hydroxide of a concentration of 0.5 N. The mixture was stirred at a predetermined stirring speed and was left to stand at 37°C for 30 minutes. The temperature was, then, lowered to normal temperature and to the mixture was added 1% of phenolphthalein dropwise. The mixture was titrated with a solution of hydrochloric acid of a concentration of 0.5 N to find a saponification value.

### (3) Measuring the concentration of fatty acid.

200 Milligrams of the oil extracted from the waste clay was dissolved in 6 ml of a methanol solution containing 2% of hydrochloric acid, and the mixture was left to stand in a water tank maintained at 60 to 80°C for 10 minutes. Next, 10 ml of a 36% methanol solution prepared by mixing hydrochloric acid and methanol at a ratio of 3:2 was added thereto, and the mixture was boiled for 10 minutes, and was cooled to obtain a methyl ester thereof. The methyl ester was dissolved in 1 ml of acetonitrile, and 4 µl thereof was injected into a gas chromatography to analyze it. Further, a pentadecanoic acid was used as an internal standard.

The gas chromatography was GC-14B of Shimazu Co., and was constituted by a 3 mm x 2 mm glass column filled with 5% Advans DS on 80/100 meshes Chromosorb W and a hydrogen ionization detector. The temperatures of the column, injection portion and oven were controlled to be 190, 240 and 250°C. The fatty acid was identified by using a commercially available standard fatty acid purchased from Sigma Co.

### (Preparation of an enzyme solution)

5 Grams of a lipase powder (F-AP15, manufactured by Amano Seiyaku Co.) stemming from Rhizopus oryzae was dissolved in 10 ml of distilled water over 30 minutes with stirring, subjected to the centrifugal separation at 3500 rpm for 10 minutes, and the supernatant solution was used as the enzyme solution (Sample R-1). The enzymatic'activity (IU/L) was analyzed by using a lipase kit S manufactured by Dainippon Seiyaku Co.

### (Example 1)

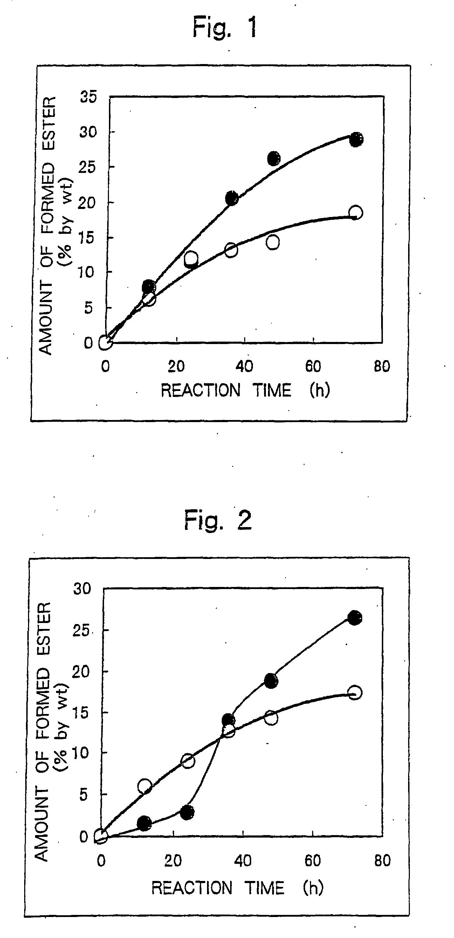

Into a 100-ml flask were introduced 11.0 g of a waste clay (activated clay of after having decolored the rape oil, oil content of 33% by weight, saponification value of oil of 181), 1 ml of a solution of the sample R-1 (enzymatic activity of 201 IU/ml), 1.25 ml of a buffer solution (pH = 7.0) and methanol of a concentration of 4.75 millimols, and the mixture was reacted at 35°C with stirring at 175 rpm for 72 hours. After the reaction, 200 µl of the reaction product was taken out and to which was added 1.0 ml of hexane. The mixture was vigorously stirred and was subjected to the centrifugal separation at 10,000 rpm for 5 minutes to separate the hexane layer. Next, the reaction product was dissolved in 1.0 ml of acetonitrile, and a methyl ester thereof was analyzed with a gas chromatography. The results were as shown in Table 3 and in Fig. 1 (black circles).

### (Comparative Example 1)

3 Grams of the rape oil (reagent manufactured by Nakaraitesk Co., saponification value of 188), 3 ml of methanol - hydrochloric acid, and 1.0 ml of methanol were introduced into a test tube with a closure, and were heated at 35°C for 72 hours. After the heating, the temperature was cooled down to normal temperature. Then, 200 µl of the mixture was taken out and to which was added 1.0 ml of hexane. The mixture was vigorously stirred and was subjected to the centrifugal separation. The hexane layer was vaporized, and the methyl ester was analyzed with the gas chromatography. The results were as shown in Table 3 and in Fig. 1 (open circles).

**Table 3**

| | Kind of oil | Amount of oil in waste clay (g) | Amount of formed methyl ester (g) | Conversion ratio (%) | Odor |
|---|---|---|---|---|---|
| Ex.1 | rape oil | 3.63 | 1.05 | 28.9 | ○ |
| Comp. | | | | | |
| Ex.1 | rape oil | 3.00 | 0.56 | 18.5 | × |
| Odor ○: no ×: yes | | | | | |

### (Example 2)

Into a 100-ml flask were introduced 11.0 g of a waste clay (activated clay of after having decolored the soybean oil, oil content of 33% by weight, saponification value of oil of 188), 1 ml of a solution of the sample R-1 (enzymatic activity of 201 IU/ml), 1.25 ml of a buffer solution (pH = 7.0) and methanol of a concentration of 4.75 millimols, and the mixture was reacted at 35°C with stirring at 175 rpm for 72 hours. After the reaction, 200 µl of the reaction product was taken out and to which was added 1.0 ml of hexane. The mixture was vigorously stirred and was subjected to the centrifugal separation at 10,000 rpm for 5 minutes to separate the hexane layer. Next, the reaction product was dissolved in 1.0 ml of acetonitrile, and a methyl ester thereof was analyzed with a gas chromatography. The results were as shown in Table 4 and in Fig. 2 (black circles).

### (Comparative Example 2)

3 Grams of the soybean oil (reagent manufactured by Wako Junyaku Co., saponification value of 193), 3 ml of methanol - hydrochloric acid, and 1.0 ml of methanol were introduced into a test tube with a closure, and were heated at 35°C for 72 hours. After the heating, the temperature was cooled down to normal temperature. Then, 200 µl of the mixture was taken out and to which was added 1.0 ml of hexane. The mixture was vigorously stirred and was subjected to the centrifugal separation. The hexane layer was vaporized, and the methyl ester was analyzed with the gas chromatography. The results were as shown in Table 4 and in Fig. 2 (open circles).

**Table 4**

| | Kind of oil | Amount of oil in waste clay (g) | Amount of formed methyl ester (g) | Conversion ratio (%) | Odor |
|---|---|---|---|---|---|
| | soybean | 3.63 | 0.96 | 26.4 | ○ |
| Ex.2 | oil | | | | |
| Comp. | soybean | | | | |
| Ex.2 | oil | 3.00 | 0.52 | 17.45 | × |
| Odor ○: no ×: yes | | | | | |

### (Example 3)

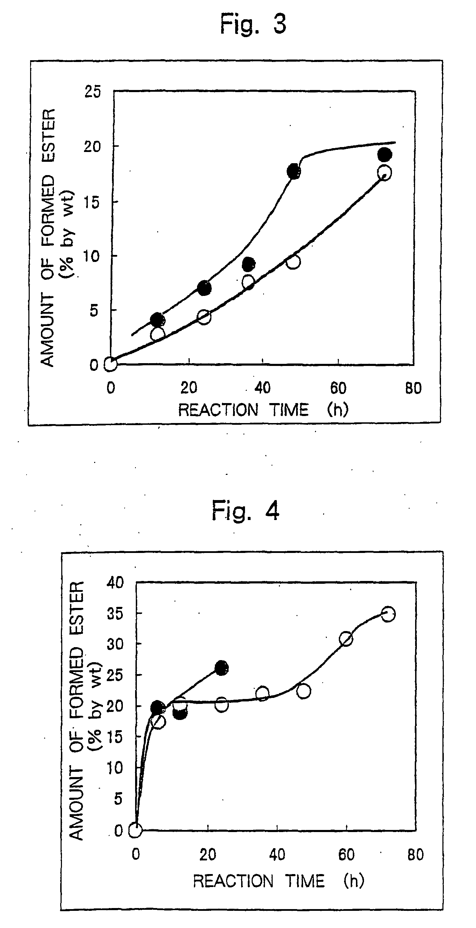

Into a 100-ml flask were introduced 11.0 g of a waste clay (activated clay of after having decolored the palm oil, oil content of 33% by weight, saponification value of oil of 176), 1 ml of a solution of the sample R-1 (enzymatic activity of 201 IU/ml), 1.25 ml of a buffer solution (pH = 7.0) and methanol of a concentration of 4.75 millimols, and the mixture was reacted at 35°C with stirring at 175 rpm for 72 hours. After the reaction, 200 µl of the reaction product was taken out and to which was added 1.0 ml of hexane. The mixture was vigorously stirred and was subjected to the centrifugal separation at 10,000 rpm for 5 minutes to separate the hexane layer. Next, the reaction product was dissolved in 1.0 ml of acetonitrile, and a methyl ester thereof was analyzed with a gas chromatography. The results were as shown in Table 5 and in Fig. 3 (black circles).

### (Comparative Example 3)

3 Grams of the palm oil (reagent manufactured by Spectrum Chemical Mfg. Corp., saponification value of 180), 3 ml of methanol - hydrochloric acid, and 1.0 ml of methanol were introduced into a test tube with a closure, and were heated at 35°C for 72 hours. After the heating, the temperature was cooled down to normal temperature. Then, 200 µl of the mixture was taken out and to which was added 1.0 ml of hexane. The mixture was vigorously stirred and was subjected to the centrifugal separation. The hexane layer was vaporized, and the methyl ester was analyzed with the gas chromatography. The results were as shown in Table 5 and in Fig. 3 (open circles).

**Table 5**

| | Kind of oil | Amount of oil in waste clay (g) | Amount of formed methyl ester (g) | Conversion ratio (%) | Odor |
|---|---|---|---|---|---|
| Ex.3 | palm oil | 3.63 | 0.69 | 19.1 | ○ |
| Comp. | | | | | |
| Ex.3 | palm oil | 3.00 | 0.53 | 17.6 | × |
| Odor ○: no ×: yes | | | | | |

### (Example 4

5 Grams of the waste clay used in Example 1, a lipase OF stemming from Candida cylindracea (powder manufactured by Meito Sangyo Co.)(amount adjusted to be 1,000 U per gram of the waste clay), 5 ml of a phosphoric acid buffer solution (pH = 7.0) and 274 µl of methanol were introduced into a 200-ml flask which was then closed with a rubber plug (the amount of methanol was found by calculation from the saponification value of the oil such that oil:methanol was 1 mol:1 mol). Then, the mixture was shaken at 37°C in a rotary shaking machine rotating at 170 rpm for 48 hours or 72 hours (methanol was added in an amount of 274 µl after 24 hours and 48 hours have passed, respectively). After the reaction, 10 ml of distilled water was added into the flask to wash the interior of the flask and was, then, transferred into a Falcon tube. Thereafter, the Falcon tube was subjected to the centrifugal separation for 15 minutes at 10,000 rpm to take out the supernatant solution. Then, hexane was added to the supernatant solution to dissolve the methyl ester that has been formed. Next, the hexane was completely blown off to analyze the methyl ester with a gas chromatography. The results were as shown in Table 6 and in Fig. 4 (open circles: reacted for 72 hours, black circles: reacted for 48 hours).

**Table 6**

| | Kind of oil | Amount of oil in waste clay (g) | Amount of formed methyl ester (g) | Conversion ratio (%) | Odor |
|---|---|---|---|---|---|
| Ex.4 | rape oil | 1.65 | 0.43 | 26.1 | ○ |
| | | | (0.57) | (34.8) | |
| Odor O: no ×: yes | | | | | |

Numerical values without parentheses represent the amounts (g) of the formed methyl ester and the conversion ratio (%) of when reacted for 48 hours and numerical values in parentheses represent the amounts (g) of the formed methyl ester and the conversion ratio (%) of when reacted for 72 hours.

### (Example 5)

10 Grams of the waste clay used in Example 3, a lipase OF stemming from Candida cylindracea (powder manufactured by Meito Sangyo Co.)(amount adjusted to be 238U per gram of the waste clay), 10 ml of hexane and 274 µl of methanol were introduced into a 500-ml flask which was then closed with a rubber plug (the amount of methanol was found by calculation from the saponification value of the oil such that oil:methanol was 1 mol:4 mols). Then, the mixture was shaken at 37°C in a reciprocal shaking machine rotating at 120 rpm for 0.5 hours, 2 hours, 4 hours, 6 hours and 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the methyl ester that has been formed. Next, the hexane was completely blown off, a chloroform was added to the obtained methyl ester to dissolve it which was then analyzed with a gas chromatography. The results were as shown in Table 7 and in Fig. 5.

### (Example 6)

10 Grams of the waste clay used in Example 3, a lipase OF stemming from Candida cylindracea (powder manufactured by Meito Sangyo Co.)(amount adjusted to be 238U per gram of the waste clay), 10 ml of hexane and ethanol of an amount of 4 mol times as great as the oil content were introduced into a 500-ml flask which was then closed with a rubber plug (the amount of ethanol was found by calculation from the saponification value of the oil).

Then, the mixture was shaken at 37°C in a reciprocal shaking machine rotating at 120 rpm for 0.5 hours, 2 hours, 4 hours, 6 hours and 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the ethyl ester that has been formed. Next, the hexane was completely blown off, a chloroform was added to the obtained ethyl ester to dissolve it which was then analyzed with a gas chromatography. The results were as shown in Table 7 and in Fig. 5.

### (Example 7)

10 Grams of the waste clay used in Example 3, a lipase OF stemming from Candida cylindracea (powder manufactured by Meito Sangyo Co.)(amount adjusted to be 238U per gram of the waste clay), 10 ml of hexane and butanol of an amount of 4 mol times as great as the oil content were introduced into a 500-ml flask which was then closed with a rubber plug (the amount of butanol was found by calculation from the saponification value of the oil).

Then, the mixture was shaken at 37°C in a reciprocal shaking machine rotating at 120 rpm for 0.5 hours, 2 hours, 4 hours, 6 hours and 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the butyl ester that has been formed. Next, the hexane was completely blown off, a chloroform was added to the obtained butyl ester to dissolve it which was then analyzed with a gas chromatography. The results were as shown in Table 7 and in Fig. 5.

### (Example 8)

10 Grams of the waste clay used in Example 3, a lipase OF stemming from Candida cylindracea (powder manufactured by Meito Sangyo Co.)(amount adjusted to be 238U per gram of the waste clay), 10 ml of hexane and n-propyl alcohol of an amount of 4 mol times as great as the oil content were introduced into a 500-ml flask which was then closed with a rubber plug (the amount of n-propyl alcohol was found by calculation from the saponification value of the oil).

Then, the mixture was shaken at 37°C in a reciprocal shaking machine rotating at 120 rpm for 0.5 hours, 2 hours, 4 hours, 6 hours and 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the n-propyl ester that has been formed. Next, the hexane was completely blown off, a chloroform was added to the obtained n-propyl ester to dissolve it which was then analyzed with a gas chromatography. The results were as shown in Table 7 and in Fig. 5.

### (Example 9)

10 Grams of the waste clay used in Example 3, a lipase OF stemming from Candida cylindracea (powder manufactured by Meito Sangyo Co.)(amount adjusted to be 1000U per gram of the waste clay), 10 ml of hexane and isopropyl alcohol of an amount of 4 mol times as great as the oil content were introduced into a 500-ml flask which was then closed with a rubber plug (the amount of the isopropyl alcohol was found by calculation from the saponification value of the oil).

Then, the mixture was shaken at 37°C in a reciprocal shaking machine rotating at 120 rpm for 0.5 hours, 2 hours, 4 hours, 6 hours and 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the isopropyl ester that has been formed. Next, the hexane was completely blown off, a chloroform was added to the obtained isopropyl ester to dissolve it which was then analyzed with a gas chromatography. The results were as shown in Table 7 and in Fig. 5.

### (Example 10)

10 Grams of the waste clay used in Example 3, a lipase OF stemming from Candida cylindracea (powder manufactured by Meito Sangyo Co.)(amount adjusted to be 238U per gram of the waste clay), 10 ml of hexane and isoamyl alcohol of an amount of 4 mol times as great the oil content were introduced into a 500-ml flask which was then closed with a rubber plug (the amount of isoamyl alcohol was found by calculation from the saponification value of the oil).

Then, the mixture was shaken at 37°C in a reciprocal shaking machine rotating at 120 rpm for 0.5 hours, 2 hours, 4 hours, 6 hours and 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the isoamyl ester that has been formed. Next, the hexane was completely blown off, a chloroform was added to the obtained isoamyl ester to dissolve it which was then analyzed with a gas chromatography. The results were as shown in Table 7 and in Fig. 5.

### (Example 11)

10 Grams of the waste clay used in Example 3, a lipase OF stemming from Candida cylindracea (powder manufactured by Meito Sangyo Co.)(amount adjusted to be 238U per gram of the waste clay), 10 ml of hexane and n-octyl alcohol of an amount of 4 mol times as great as the oil content were introduced into a 500-ml flask which was then closed with a rubber plug (the amount of n-octyl alcohol was found by calculation from the saponification value of the oil).

Then, the mixture was shaken at 37°C in a reciprocal shaking machine rotating at 120 rpm for 0.5 hours, 2 hours, 4 hours, 6 hours and 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the n-octyl ester that has been formed. Next, the hexane was completely blown off, a chloroform was added to the obtained n-octyl ester to dissolve it which was then analyzed with a gas chromatography. The results were as shown in Table 7 and in Fig. 5.

**Table 7**

| | Kind of oil | Amount of oil in waste clay (g) | Amount of formed alkyl ester (g) | Conversion ratio (%) |
|---|---|---|---|---|
| Ex.5 | palm oil | 3.3 | 2.7 | 83.0 |
| Ex.6 | palm oil | 3.3 | 3.0 | 90.1 |
| Ex.7 | palm oil | 3.3 | 3.1 | 94.6 |
| Ex.8 | palm oil | 3.3 | 3.0 | 92.2 |
| Ex.9 | palm oil | 3.3 | 2.9 | 88.0 |
| Ex.10 | palm oil | 3.3 | 3.0 | 91.0 |
| Ex.11 | palm oil | 3.3 | 0.93 | 28.3 |

Examples 5, 7, 10 and 11 were evaluated for their ignitability, degree of black smoke when burned and odor. The results were as shown in Table 8.

**Table 8**

| | Ignitability | Degree of black smoke | Odor |
|---|---|---|---|
| Ex. 5 | ○ | ○ | ○ |
| Ex. 7 | ○ | ○ | ○ |
| Ex. 10 | ○ | ○ | ○ |
| Ex. 11 | × | × | × |
| Ignitability ○: good X: poor | | | |
| Degree of black smoke ○: none X: yes | | | |
| Odor ○: none X: yes | | | |

### (Examples 12 to 15)

10 Grams of the waste clay used in Example 3, a lipase OF stemming from Candida cylindracea (powder manufactured by Meito Sangyo Co.)(amount adjusted to be 238U per gram of the waste clay), 10 ml of hexane and methanol were introduced into a 200-ml flask which was then closed with a rubber plug (the amounts of methanol were found by calculation from the saponification value of the oil such that the ratios of oil:methanol were 1 mol:3 mols, 1 mol:4 mols, 1 mol:5 mols, and 1 mol:6 mols).

Then, the mixtures were shaken at 37°C in a reciprocal shaking machine rotating at 120 rpm for 24 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the methyl ester that has been formed. Next, the hexane was completely blown off, a chloroform was added to the obtained methyl ester to dissolve it which was then analyzed with a gas chromatography. The results were as shown in Table 9 in which the conversion ratios (%) were those of maximum values.

**Table 9**

| | Oil:alcohol (mol ratio) | Amount of oil in waste clay (g) | Amount of formed alkyl ester (g) | Conversion ratio (%) |
|---|---|---|---|---|
| Ex.12 | 1:3 | 3.3 | 2.6 | 80.3 |
| Ex.13 | 1:4 | 3.3 | 2.7 | 83.0 |
| Ex.14 | 1:5 | 3.3 | 1.8 | 54.2 |
| Ex.15 | 1:6 | 3.3 | 1.0 | 30.0 |

### (Examples 16 to 18)

10 Grams of the waste clay used in Example 3, a lipase OF stemming from Candida cylindracea (powder manufactured by Meito Sangyo Co.)(amount adjusted to be 238U per gram of the waste clay) and, as solvents, a petroleum ether, a hexane and a diethyl ether each in an amount of 9 ml, as well as 274 µl of methanol were introduced into a 200-ml flask which was then closed with a rubber plug.

Then, the mixtures were shaken at 37°C in a reciprocal shaking machine rotating at 120 rpm for 2 hours, 4 hours, 6 hours and 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the methyl ester that has been formed. Next, the hexane was completely blown off, a chloroform was added to the obtained methyl ester to dissolve it which was then analyzed with a gas chromatography. The results were as shown in Table 10 and in Fig. 6.

**Table 10**

| | Solvent | Amount of oil in waste clay (g) | Amount of formed alkyl ester (g) | Conversion ratio (%) |
|---|---|---|---|---|
| Ex.15 | hexane | 3.3 | 2.7 | 80.5 |
| Ex.16 | petroleum ether | 3.3 | 2.7 | 80.4 |
| Ex.17 | diethyl ether | 3.3 | 1.4 | 41.2 |

### (Example 19)

1.0 Kilograms of the waste clay used in Example 3, a lipase OF stemming from Candida cylindracea (powder manufactured by Meito Sangyo Co.)(amount adjusted to be 238U per gram of the waste clay), 600 ml of hexane and butanol of an amount of 4 mol times as great as the oil content were introduced into a 5-liter flask which was then closed with a rubber plug (the amount of butanol was found by calculation from the saponification value of the oil).

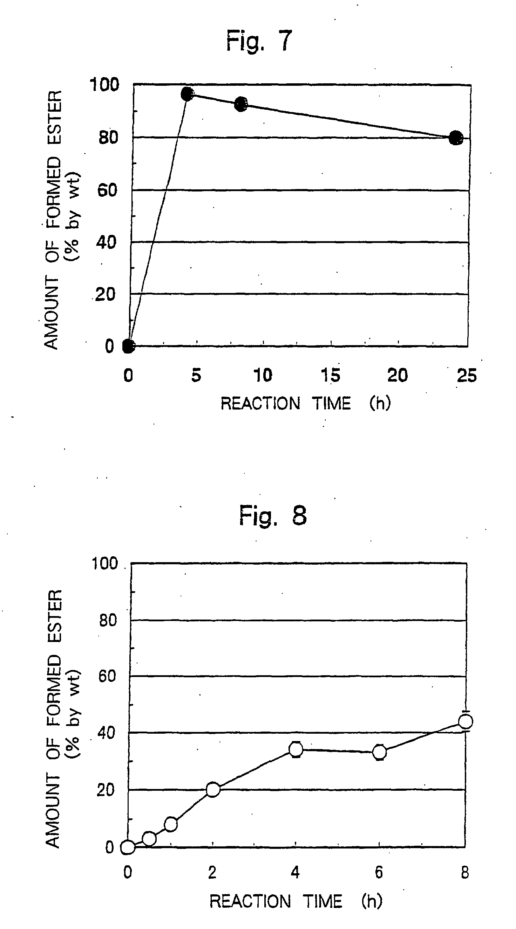

Then, the mixture was shaken at 37°C in a rotary shaking machine rotating at 170 rpm for 4 hours, 8 hours and 24 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the butyl ester that has been formed. Next, the hexane was completely blown off, a chloroform was added to the obtained butyl ester to dissolve it which was then analyzed with a gas chromatography. The results were as shown in Table 11 and in Fig. 7.

**Table 11**

| | Solvent | Amount of oil in waste clay (g) | Amount of formed alkyl ester (g) | Conversion ratio (%) |
|---|---|---|---|---|
| Ex.19 | hexane | 330 | 314.2 | 95.2 |

### (Example 20)

10 Grams of the waste clay used in Example 3, a lipase OF stemming from Candida cylindracea (powder manufactured by Meito Sangyo Co.)(amount adjusted to be 238U per gram of the waste clay), 10 ml of hexane and butanol of an amount of 4 mol times as great as the oil content were introduced into a 200-ml flask which was then closed with a rubber plug (the amount of butanol was found by calculation from the saponification value of the oil).

Then, the mixture was shaken at 37°C in a reciprocal shaking machine rotating at 120 rpm for 8 hours. After the reaction, the reaction solution was transferred into a Falcon tube. Thereafter, the Falcon tube was subjected to the centrifugal separation for 15 minutes at 10,000 rpm to take out the supernatant solution. Then, hexane was added to the supernatant solution to dissolve the butyl ester that has been formed. Next, the hexane was completely blown off, a chloroform was added to the obtained butyl ester to dissolve it which was then analyzed with a gas chromatography. The results were as shown in Table 12 and in Fig. 8

**Table 12**

| | Solvent | Amount of oil in waste clay (g) | Amount of formed alkyl ester (g) | Conversion ratio (%) |
|---|---|---|---|---|
| Ex.20 | hexane | 3.3 | 1.5 | 44.0 |

According to the present invention, an enzyme is caused to act on the oils and fats in the waste clay to decompose them into a fatty acid which is then reacted with a lower alcohol to form a monoester thereof. Thus, an environment friendly bio-fuel is obtained from the starting waste clay through a decreased number of steps without requiring cumbersome operations.

## Claims

1. A method of producing bio-fuels by causing an enzyme to act upon the oils and fats in a waste clay to decompose them into a fatty acid, and reacting the formed fatty acid with a lower alcohol to form an ester thereof that can be used as a bio-fuel.

2. A production method according to claim 1, wherein the decomposition and the reaction of the fatty acid with the lower alcohol are carried out in water or in an organic solvent.

3. A production method according to claim 1, wherein the oils and fats are those of plant oils.

4. A production method according to claim 1, wherein the enzyme is a lipase.

5. A production method according to claim 1, wherein the reaction of the fatty acid with the lower alcohol is carried out in the presence of from 25 to 250 parts by weight of water or an organic solvent per 100 parts by weight of the oils and fats.

6. A production method according to claim 2, wherein a hexane or a petroleum ether is used as the organic solvent.

7. A production method according to claim 1, wherein the reaction of the fatty acid with the lower alcohol is carried out at a temperature of from 20 to 50°C.

8. A production method according to claim 1, wherein a glyceride contained in the residual waste clay after the fatty acid is separated, is extracted and is circulated into a step of decomposition into the fatty acid or into the step of esterification.

9. A production method according to claim 1, wherein a lower alcohol with not more than 8 carbon atoms is used.
